# EUROPEAN PATENT APPLICATION

(11) **EP 2 445 142 A1**
(43) Date of publication of application: **25.04.2012**
(21) Application number: 11184480.9
(22) Date of filing: 10.10.2011
(51) Int. Cl.: H04L 12/24

(54) **Dynamic bandwidth adjustment for multiple service support**

(30) Priority: 22.10.2010 US 910344
(71) Applicant: Fujitsu Limited, Kawasaki-shi, Kanagawa 211-8588 (JP)
(72) Inventor: Devireddy, Sreedhar, 524201 Andhra Pradesh (IN)
(74) Representative: HOFFMANN EITLE

(57) **Abstract**

A system and method are provided for dynamically modifying a first bandwidth profile assigned to end user 112 receiving a plurality of services from a service provider. The system and method may include communicating a request for a change in the first bandwidth profile to the service provider via a multicast messaging protocol and receiving a second bandwidth profile assigned to end user 112, the second bandwidth profile reflecting the request for a change in the first bandwidth profile.

## Description

### TECHNICAL FIELD

This invention relates generally to the field of communication networks and more specifically to dynamically adjusting the bandwidth assigned to an end user receiving services from a service provider over a communication network.

### BACKGROUND

A communication network for providing services to an end user may include a service provider configured to provided a variety of services to the end user. These services may include high-speed internet, television, and/or telephony services. As modern communication applications increasingly demand multiple services for a variety of content needs, the requirements for providing these services at appropriate levels grows increasingly complex. For example, designing a communication path from the service provider to the end user may be optimal for some services, but suboptimal for others. Although an end user may be able to accurately identify which services should be optimized at an initial starting point, the end user's needs may change over time. Additionally, as the service provider offers an increasing variety of services, the communication path optimized for legacy services may no longer be in the end user's best interest.

One current method of altering the bandwidth needs for an end user involve manually contacting the service provider and requesting a new service level agreement, for instance by calling the service provider. However, it may not be possible to alter the current communication path after this contact while the service provider processes the request.

Among other disadvantages of current methods of maintaining the communication path, this manual method may not allow a service provider to take full advantage of the dynamic nature of changing information needs.

### SUMMARY OF THE DISCLOSURE

In accordance with the present invention, disadvantages and problems associated with previous techniques for dynamically allocating network resources may be reduced or eliminated.

According to one embodiment of the present invention, a method is provided for dynamically modifying a first bandwidth profile assigned to an end user of a service provider, wherein the end user receives a plurality of services from the service provider. The method may include communicating a request for a change in the first bandwidth profile to the service provider via a multicast messaging protocol, and receiving a second bandwidth profile assigned to the end user, the second bandwidth profile reflecting the request for a change in the first bandwidth profile.

Certain embodiments of the invention may provide one or more technical advantages. A technical advantage of one embodiment may be that dynamically changing a bandwidth profile assigned to an end user may allow a service provider to take full advantage of the changing nature of the end user's bandwidth needs by automatically changing the bandwidth profile, allowing the service provider to incorporate this automated information into the policing, shaping, and scheduling algorithms it uses to control its network traffic. Some embodiments may also allow a service provider to more accurately charge for its network traffic according to the changing needs of the end user.

Certain embodiments of the invention may include none, some, or all of the above technical advantages. One or more other technical advantages may be readily apparent to one skilled in the art from the figures, descriptions, and claims included herein.

### BRIEF DESCRIPTION OF THE DRAWINGS

For a more complete understanding of the present invention and its features and advantages, reference is now made to the following description, taken in conjunction with the accompanying drawings, in which:
FIGURE 1 illustrates a communication system in accordance with certain embodiments of the present disclosure;
FIGURE 2 illustrates an example multicast messaging protocol, in accordance with certain embodiments of the present disclosure;
FIGURE 3 represents an example auxiliary data field of a multicast messaging protocol, in accordance with certain embodiments of the present disclosure; and
FIGURE 4 is a flowchart illustrating one embodiment of a method of dynamically changing bandwidth to support multiple services, in accordance with certain embodiments of the present disclosure.

### DETAILED DESCRIPTION OF THE DRAWINGS

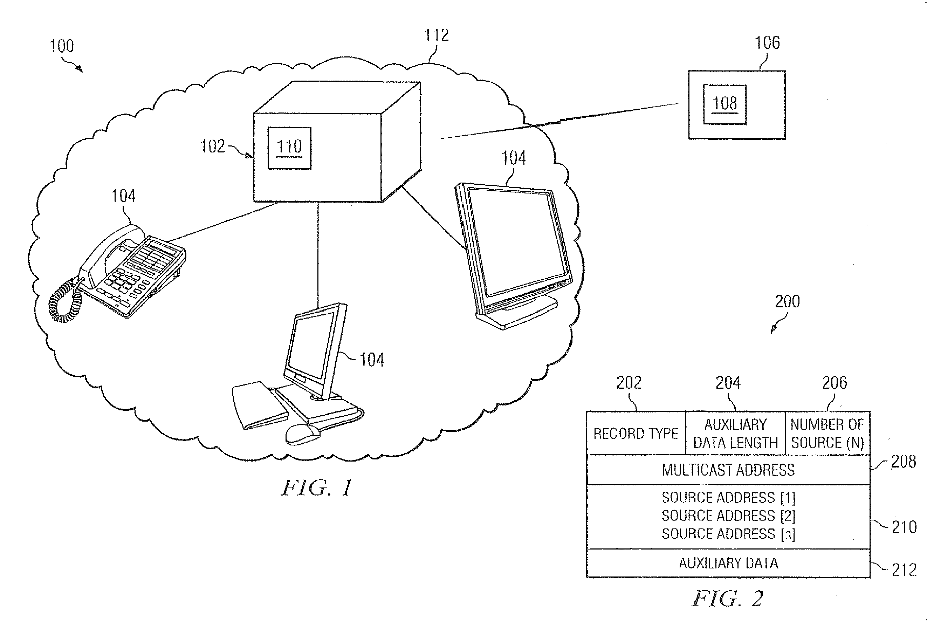

Embodiments of the present invention and its advantages are best understood by referring to Figures 1-4 of the drawings, like numerals being used for like and corresponding parts of the various drawings.

FIGURE 1 illustrates a communication system 100 in accordance with certain embodiments of the present disclosure. In some embodiments, communication system 100 may include service provider 106 in communication with an end user 112 of service provider 106. End user 112 may be responsible for components such as router 102 and customer premises equipment 104.

In general, end user 112 may be any person, business, machine, group of machines, or any other appropriate entity receiving a plurality of services from service provider 106 in accordance with a service level agreement between end user 112 and service provider 106. In the illustrated embodiment, end user 112 may own or operate customer premises equipment 104 communicatively coupled to router 102 and communicatively coupled to service provider 106 via router 102 over any suitable communication network. In other embodiments, end user 112 may be synonymous with router 102 and/or customer premises equipment 104. The service level agreement between end user 112 and service provider 106 may specify, among other things, the level of bandwidth to be allocated to end user 112 in the receipt of services from service provider 106.

In some embodiments, service provider 106 may be a cable operator, telephone operator, internet service provider, some combination thereof, or any other appropriate provider of services to end user 112 of service provider 106. In some embodiments, service provider 106 may provide one or more services to end user 112 of service provider 106. As an illustrative example, such services may include television, high-speed internet, and/or telephony services. When bundled together, these three services may sometimes be referred to as a "triple play" service offering. Other services may include, for example, certain mobility services such as a Dual Mode Global System for Mobile Communications (GSM) Plus WiFi Service that allow mobile users to switch between GSM and WiFi within the range of a home-wired service.

In some embodiments, customer premises equipment 104 may include a number of devices used by end user 112 to receive services from service provider 106. Customer premises equipment 104 may include devices such as a television or cable box or satellite television receiver, a home computer, or home computer peripheral configured to receive high-speed internet such as a high-speed internet router, or a home telephone configured to receive telephony services from service provider 106.

In some embodiments, communication system 100 may also include router 102 configured to communicatively couple each of the customer premises equipment 104 to service provider 106. In some embodiments, router 102 may be configured to receive one signal from service provider 106 and route the appropriate service to the appropriate piece of customer premises equipment 104. As an illustrative example, router 102 may be communicatively coupled to service provider 106 and receive a triple-play communications package from service provider 106. Router 102 may then send the appropriate television signal to customer premises equipment 104 television, telephony signal to customer premises equipment 104 telephone and high-speed internet signal to customer premises equipment 104 computer or computer peripheral such as a wireless router.

In some embodiments, router 102 may also include query module 110. Query module 110 may be configured to communicate with service provider 106. In some embodiments, this communication may include sending and receiving certain multicast messaging protocols between router 102 and service provider 106. Although, in the illustrative embodiment, query module 110 is part of router 102, in other embodiments query module 110 may be incorporated to each of customer premises equipment 104. For example, in an embodiment where customer premises equipment 104 communicates directly with service provider 106 without the need of router 102, customer premises equipment 104 may include query module 110. In some embodiments, query module 110 may be implemented on hardware or software running on hardware, or any appropriate combination thereof. In other embodiments, query module 110 may be implemented on computer-readable media containing instructions configured to be read by a processor to carry out the functions described.

In some embodiments, service provider 106 may also include bandwidth adjustment module 108. Bandwidth adjustment module 108 may be configured to adjust the bandwidth profile assigned to end user 112 of service provider 106. As described in more detail below with reference to FIGURES 2-4, end user 112 may request a change in the bandwidth profile assigned to end user 112 for a variety of reasons. In some embodiments, end user 112 may request this change via communication of a multicast messaging protocol from query module 110. Upon receipt of this communication at service provider 106, bandwidth adjustment module 108 may change the bandwidth profile associated with end user 112. In some embodiments, bandwidth adjustment module 108 may be implemented on hardware or software running on hardware, or any appropriate combination thereof. In other embodiments, bandwidth adjustment module 108 may be implemented on computer-readable media containing instructions configured to be read by a processor to carry out the functions described.

In operation, an end-user of customer premises equipment 104 may be assigned an initial bandwidth profile by service provider 106 as part of an initial service level agreement. In some embodiments, the initial bandwidth profiled may be stored at service provider 106 and accessed by bandwidth adjustment module 108. As an illustrative example, the bandwidth profile may describe the amount of bandwidth promised to end user 112 for the receipt of service from service provider 106 such as a triple play package. At some point, end user 112 may desire a change in the bandwidth allocated to end user 112 by service provider 106. As a result of this desire for an increase or decrease in bandwidth, query module 110 may encode certain information on multicast messaging protocols for communication to service provider 106 as described in more detail below with reference to Figures 2 through 4. Upon receipt of this multicast messaging protocol, service provider 106 may be configured to modify the bandwidth profile assigned to end user 112. Bandwidth adjustment module 108 of service provider 106 may be configured to execute this adjustment and change the bandwidth profile assigned to end user 112 by service provider 106.

FIGURE 2 illustrates an example multicast messaging protocol 200, in accordance with certain embodiments of the present disclosure. In the illustrated embodiment, multicast messaging protocol 200 is an Internet Group Management Protocol (IGMP) packet. Although an IGMP membership report message is illustrated, other multicast messaging protocols may be used within the scope of this disclosure without departing from the scope of the disclosure. Multicast messaging protocol 200 may include a plurality of data fields including record type 202, auxiliary data link 204, number of sources 206, multicast address 208, source addresses 210, and auxiliary data 212.

In some embodiments, record type 202 may be an eight-bit field configured to identify the type of message being sent with multicast messaging protocol 200. For example, record type 202 may indicate a general query or a group-specific query. In the illustrated embodiment record type 202 may indicate that multicast messaging protocol 200 is a dynamic bandwidth adjustment message.

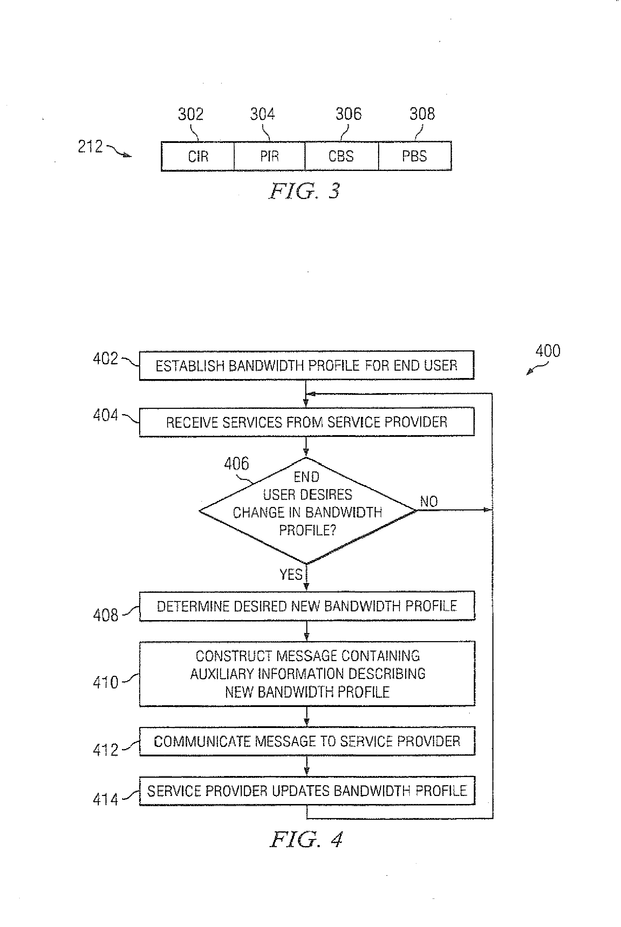

In some embodiments, auxiliary data length field 204 may be a eight-bit field indicating the length of the auxiliary data in auxiliary data field 212. For example, as described in more detail below with reference to FIGURE 3, auxiliary data field 212 may contain a plurality of data fields indicating various aspects of a bandwidth profile associated with end user 112 of service provider 106. Some or all of these data fields may be populated with data. Auxiliary data length field 204 may in some embodiments be used to indicate the length of this field.

In some embodiments, number of sources field 206 may be configured to indicate the number of source addresses listed in source address field 210. In some embodiments, number of source field may be a sixteen-bit field indicating the number of source addresses to which the services provided by service provider 106 may be directed. For example, in the illustrated embodiment of FIGURE 1, there are three pieces of customer premises equipment 104 coupled to router 102. Multicast messaging protocol 200 may need to indicate that all customer premises equipment 104 attached to communication network 100 are applicable to multicast messaging protocol 200. In such an example, number of sources field 206 may indicate the number "3."

In some embodiments, multi-task address field 208 may indicate the address of a multicast device configured to receive services from service provider 106. In the illustrated embodiment of Figure 1, the multicast device may be router 102. In other embodiments, the multicast address field 208 may indicate a different multicast device configured to receive a plurality of services from service provider 106.

Referring again to FIGURE 2, source address field 210 may include the addresses of devices configured to receive one or more of a plurality of services received from service provider 106. As an illustrative example, source address field 210 may be a thirty-two-bit field configured to contain the internet protocol (IP) address of a source device configured to receive one or more of the services provided by service provider 106. In the illustrative example of Figure 1, customer premises equipment 104 may be a device configured to receive one or more services from service provider 106. In the illustrative example, source address field 210 may include the IP addresses of the telephone, computer and television customer premises equipment 104 illustrated in FIGURE 1.

In some embodiments, auxiliary data field 212 may include certain data used to indicate a desired change in the bandwidth profile assigned to end user 112 of service provider 106. As described in more detail below with reference to FIGURE 3, auxiliary data field 212 may include a plurality of data fields used to indicate certain portions of a bandwidth profile associated with end user 112 of service provider 106.

FIGURE 3 represents an example auxiliary data field 212 in accordance with certain embodiments of the present disclosure. Generally, example auxiliary data field 212 of FIGURE 3 corresponds with auxiliary data field 212 of FIGURE 2. In some embodiments, auxiliary data field 212 may contain a plurality of data fields describing the bandwidth profile assigned to end user 112 of service provider 106. In the illustrated embodiment, auxiliary data field 212 includes four data fields: committed information rate field 302, peak information rate field 304, committed burst size field 306, and peak burst size field 308. In other embodiments, auxiliary data field 212 may include more or fewer data fields.

In some embodiments, committed information rate field 302 may be a data field containing a data value representative of the minimum guaranteed bit rate assigned to the bandwidth profile for services provided by service provider 106. The committed information rate may represent the bandwidth allocated to end user 112 as part of the initial service level agreement. In general, the committed information rate may be the average bandwidth deemed necessary or desirable to meet the service level agreement. As an illustrative example, end user 112 may have a service level agreement with service provider 106 for a ten Mbps ethernet private line. The bandwidth profile for end user 112 with such a service level agreement may further specify that the committed information rate is two Mbps.

In some embodiments, the bandwidth profile may also include a peak information rate value. In the illustrated embodiment, the peak information rate value may be contained in peak information rate field 304. The peak information rate may represent the maximum allowable bandwidth available to end user 112 under the service level agreement. In the illustrative example, the peak information rate may be ten Mbps, or the maximum transmission rate of the communication link.

In some embodiments, the bandwidth profile may also include a committed burst size value. In the illustrated embodiment, the committed burst size value may be contained in committed burst size field 306. The committed burst size may represent the average size of the information packets transmitted over the communication link by service provider 106. In the illustrative example, the committed burst size may be two KB.

In some embodiments, the bandwidth profile may also include a peak burst size value. In the illustrated embodiment, the peak burst size value may be contained in peak burst size field 308. The peak burst size may represent the maximum allowable size of the information packets transmitted over the communication link by service provider 106. In the illustrative example, the peak burst size may be four KB.

Although certain numbers are provided to assist in understanding the present disclosure, these numbers should not be read as limiting. For example, end user 112 may have a service level agreement for fifty Mbps or one hundred Mbps or any other appropriate transmission rate. Additionally, the service level agreement may be for an ethernet virtual private line or any other type of communication link appropriate for communicating a plurality of services from service provider 106 to end user 112. Further, as described in more detail below with reference to FIGURE 4, the committed information rate, peak information rate, committed burst size, and peak burst size values may vary depending on the services received from service provider 106 and the service level agreement between service provider 106 and end user 112. Optimizing different services may require different bandwidth profiles. For example, committed burst size may be larger for some high-speed internet services than would be necessary for telephony services.

Additionally, although the illustrated embodiment provides four values to determine the bandwidth profile, a bandwidth profile may include more, fewer, or different values without departing from the scope of the present disclosure.

FIGURE 4 is a flowchart illustrating one embodiment of a method 400 of dynamically changing bandwidth to support multiple services, in accordance with certain embodiments of the present disclosure. Method 400 may include determining a new desired bandwidth profile and adjust the bandwidth profile assigned to end user 112 of service provider 106.

According to one embodiment, method 400 preferably begins at step 402. Teachings of the present disclosure may be implemented in a variety of configurations of system 100. As such, the preferred initialization point for method 400 and the order of steps 402-414 comprising method 400 may depend on the implementation chosen.

At step 402, service provider 106 may establish a bandwidth profile for a given end user 112. As described in more detail above with reference to FIGURES 1-3, end user 112 may have a bandwidth profile assigned based on a plurality of services received from service provider 106. In some embodiments, the bandwidth profile may include a plurality of data values establishing a service level agreement for end user 112. As an illustrative example, the bandwidth profile may include a committed information rate, peak information rate, committed burst size, and a peak burst size. After establishing the bandwidth profile, method 400 may proceed to step 404.

At step 404, end user 112 of service provider 106 may receive services from service provider 106. As described in more detail above with reference to FIGURE 1-3, such services may include high-speed internet, television, and/or telephony services. Such services may be variously bundled or unbundled, according to the particular configuration of service provider 106. After receiving services, method 400 may proceed to step 406.

At step 406, end user 112 of service provider 106 may determine that a change in the assigned bandwidth profile is necessary or desirable. As described in more detail above with reference to FIGURES 1-3, a change in bandwidth profile may be necessary or desirable as a result of a change in actual usage of services as compared to expected usage, or as a desire to add or remove the number of services received from service provider 106. If a change in bandwidth profile is desired, method 400 may proceed to step 408. If no change is desired, method 400 may return to step 404, where end user 112 may continue to receive services from service provider 106.

At step 408, end user 112 may determine the desired new bandwidth profile. As described in more detail above with reference to FIGURES 1-3, the determination of actual changes to the bandwidth profile may be done by any appropriate combination of manual and/or automatic calculations of changes in the prescribed data values comprising the bandwidth profile. As an illustrative example, end user 112 may determine that it is necessary or desirable to improve the performance of streaming video over high-speed internet services provided by service provider 106. End user 112 may manually tell query module 110 the desired changes in the parameters of the bandwidth profile. In a more likely example, end user 112 may use a software interface to query module 110 to indicate a desired increase in high-speed internet performance. Query module 110 may then, by itself or in combination with another module of router 102 and/or customer premises equipment 104, automatically determine the appropriate changes in the parameters of the bandwidth profile. After determining the new bandwidth profile, method 400 may proceed to step 410.

At step 410, method 400 may construct a message for communicating the new bandwidth profile to service provider 106. As described in more detail above with reference to FIGURES 1-3, query module 110 may construct a multicast messaging protocol containing information describing the new bandwidth profile for communication to bandwidth adjustment module 108 of service provider 106. As an illustrative example, query module 110 may construct auxiliary data for inclusion in an IGMP packet as described in more detail above with reference to FIGURES 2-3. After constructing the message, method 400 may proceed to step 412.

At step 412, method 400 may communicate the message constructed in step 410 to service provider 106, as described in more detail above with reference to FIGURES 1-3. After communicating the message to service provider 106, method 400 may proceed to step 414. At step 414, service provider 106 may update the bandwidth profile assigned to end user 112, as described in more detail above with reference to FIGURES 1-3. In some embodiments, service provider 106 may update the bandwidth profile assigned to end user 112 automatically upon receiving the message constructed in step 410. After updating the bandwidth profile, method 400 may return to step 404, where end user 112 may continue to receive services from service provider 106 under the updated bandwidth profile.

Although FIGURE 4 discloses a particular number of steps to be taken with respect to method 400, method 400 may be executed with more or fewer steps than those depicted in FIGURE 4. In addition, although FIGURE 4 discloses a certain order of steps comprising method 400, the steps comprising method 400 may be completed in any suitable order. For example, method 400 may determine the desired new bandwidth profile and construct the corresponding message in the same step. Additionally, in some configurations it may be necessary or desirable to have a set of predefined, alternative bandwidth profiles from which end user 112 can choose. In such a configuration, method 400 may determine new bandwidth profiles prior to end user 112 deciding to change the existing bandwidth profile. Further, method 400 may include the additional step of updating the fee schedule and/or service level agreement between service provider 106 and end user 112 as a result of the change in the bandwidth profile.

While this disclosure has been described in terms of certain embodiments and generally associated methods, alterations and permutations of the embodiments and methods will be apparent to those skilled in the art. Accordingly, the above description of example embodiments does not constrain this disclosure. Other changes, substitutions, and alterations are also possible without departing from the spirit and scope of this disclosure, as defined by the following claims.
the steps comprising method 400 may be completed in any suitable order. For example, method 400 may determine the desired new bandwidth profile and construct the corresponding message in the same step. Additionally, in some configurations it may be necessary or desirable to have a set of predefined, alternative bandwidth profiles from which end user 112 can choose. In such a configuration, method 400 may determine new bandwidth profiles prior to end user 112 deciding to change the existing bandwidth profile. Further, method 400 may include the additional step of updating the fee schedule and/or service level agreement between service provider 106 and end user 112 as a result of the change in the bandwidth profile.

While this disclosure has been described in terms of certain embodiments and generally associated methods, alterations and permutations of the embodiments and methods will be apparent to those skilled in the art. Accordingly, the above description of example embodiments does not constrain this disclosure. Other changes, substitutions, and alterations are also possible without departing from the spirit and scope of this disclosure, as defined by the following claims.

Further embodiments:
E1: A system for dynamically modifying a first bandwidth profile assigned to an end user of a service provider, wherein the end user receives a plurality of services from the service provider, the system comprising a query module communicatively coupled to the service provider, the query module configured to:
   communicate a request for a change in the first bandwidth profile to the service provider via a multicast messaging protocol; and
   receive a second bandwidth profile assigned to end user, the second bandwidth profile reflecting the request for a change in the first bandwidth profile.
E2: The system of E1, wherein the request for a change in the first bandwidth profile comprises a request for an additional service from the service provider.
E3: The system of E1, wherein the second bandwidth profile comprises a change in a committed information rate from the first bandwidth profile.
E4: The system of E1, wherein the second bandwidth profile comprises a change in a peak information rate from the first bandwidth profile.
E5: The system of E1, wherein the second bandwidth profile comprises a change in a committed burst size from the first bandwidth profile.
E6: The system of E1, wherein the second bandwidth profile comprises a change in a peak burst size from the first bandwidth profile.
E7: The system of E1, wherein the multicast messaging protocol comprises Internet Group Management Protocol.
E8: The system of E1, wherein the plurality of services comprise at least telephony, television, and high-speed internet services.
E9: A system for dynamically modifying a first bandwidth profile assigned to an end user of a service provider, wherein the end user receives a plurality of services from the service provider, the system comprising a query module communicatively coupled to the service provider, the query module configured to:
   communicate a request for a change in the first bandwidth profile to the service provider via an Internet Group Management Protocol packet; and
   receive a second bandwidth profile assigned to end user, the second bandwidth profile reflecting the request for a change in the first bandwidth profile, wherein the second bandwidth profile comprises a change in the profile data value group consisting of committed information rate, peak information rate, committed burst size, and peak burst size.
E10: The system of E9, wherein the request for a change in the first bandwidth profile comprises a request for an additional service from the service provider.

## Claims

1. A method for dynamically modifying a first bandwidth profile assigned to an end user of a service provider, wherein the end user receives a plurality of services from the service provider, the method comprising:
communicating a request for a change in the first bandwidth profile to the service provider via a multicast messaging protocol; and
receiving a second bandwidth profile assigned to end user, the second bandwidth profile reflecting the request for a change in the first bandwidth profile.

2. The method of Claim 1, wherein the request for a change in the first bandwidth profile comprises a request for an additional service from the service provider.

3. The method of Claim 1, wherein the second bandwidth profile comprises a change in a committed information rate from the first bandwidth profile.

4. The method of Claim 1, wherein the second bandwidth profile comprises a change in a peak information rate from the first bandwidth profile.

5. The method of Claim 1, wherein the second bandwidth profile comprises a change in a committed burst size from the first bandwidth profile.

6. The method of Claim 1, wherein the second bandwidth profile comprises a change in a peak burst size from the first bandwidth profile.

7. The method of Claim 1, wherein the multicast messaging protocol comprises Internet Group Management Protocol.

8. The method of Claim 1, wherein the plurality of services comprise at least telephony, television, and high-speed internet services.

9. The method of Claim 1, further comprising receiving an updated fee schedule, the updated fee schedule reflecting a change in the amount charged by the service provider for the second bandwidth profile.

10. A system for dynamically modifying a first bandwidth profile assigned to an end user of a service provider, wherein the end user receives a plurality of services from the service provider, the system comprising a query module communicatively coupled to the service provider, the query module configured to:
communicate a request for a change in the first bandwidth profile to the service provider via a multicast messaging protocol; and
receive a second bandwidth profile assigned to end user, the second bandwidth profile reflecting the request for a change in the first bandwidth profile.

11. The system of Claim 10, wherein the query module is further configured to receive an updated fee schedule, the updated fee schedule reflecting a change in the amount charged by the service provider for the second bandwidth profile.

12. A system for dynamically modifying a first bandwidth profile assigned to an end user of a service provider, wherein the end user receives a plurality of services from the service provider, the system comprising a query module communicatively coupled to the service provider, the query module configured to:
communicate a request for a change in the first bandwidth profile to the service provider via an Internet Group Management Protocol packet; and
receive a second bandwidth profile assigned to end user, the second bandwidth profile reflecting the request for a change in the first bandwidth profile, wherein the second bandwidth profile comprises a change in the profile data value group consisting of committed information rate, peak information rate, committed burst size, and peak burst size.

13. The system of Claim 12, wherein the request for a change in the first bandwidth profile comprises a request for an additional service from the service provider.
